# EUROPEAN PATENT SPECIFICATION

(11) **EP 4 431 223 B1**
(45) Date of publication and mention of the grant of the patent: **17.12.2025**
(21) Application number: 23754094.3
(22) Date of filing: 29.03.2023
(51) Int. Cl.: B23K 26/16, B23K 26/21, B23K 26/70, B23K 26/142, B23K 26/082, B23K 37/04

(54) **DUST REMOVAL ASSEMBLY AND LASER WELDING DEVICE WITH SUCH ASSEMBLY**
STAUBENTFERNUNGSANORDNUNG UND LASERSCHWEISSVORRICHTUNG MIT EINER SOLCHEN ANORDNUNG
ENSEMBLE D'ÉLIMINATION DE POUSSIÈRE ET DISPOSITIF DE SOUDAGE AU LASER AVEC UN TEL ENSEMBLE

(30) Priority: 30.01.2023 CN 202320087300 U
(43) Date of publication of application: 18.09.2024
(73) Proprietor: Contemporary Amperex Technology (Hong Kong) Limited, Central, Central And Western District (HK)
(72) Inventor: LIU, Kun, Ningde, Fujian 352100 (CN); SONG, Lei, Ningde, Fujian 352100 (CN); ZHONG, Guangcheng, Ningde, Fujian 352100 (CN); LI, Hongtao, Ningde, Fujian 352100 (CN); CHEN, Kongdong, Ningde, Fujian 352100 (CN)
(74) Representative: Lorenz Seidler Gossel Part. mbB
(86) International application number: PCT/CN2023/084900
(87) International publication number: WO 2024/159609

(56) References cited:
- CN-A- 110 695 526
- CN-U- 202 411 658
- CN-U- 203 918 241
- CN-U- 211 613 658
- CN-U- 215 142 866
- CN-U- 215 940 892
- CN-U- 217 096 145
- JP-A- 2009 204 966
- JP-A- 2009 285 674
- US-A1- 2021 138 585

## Description

The present invention refers to the technical field of welding devices, and in particular, to a dust removal assembly and a laser welding device, see claims 1 and 10.

### BACKGROUND

In related technologies, a laser marking machine is disclosed, including a galvanometer and a dustproof lens installed at the bottom of the galvanometer. A fastening frame and an ionizing bar fastened to the fastening frame are disposed below the galvanometer. Ionic wind produced by the ionizing bar can eliminate static electricity of dust in air below the galvanometer, thereby preventing dust from adhering to the lens of the galvanometer due to static electricity.

However, if dust has adhered to the lens of the galvanometer, the lens of the galvanometer cannot be cleaned automatically, and the risk of non-electrostatic dust (such as welding fumes, welding spatter, and airborne fibers) adhering to and contaminating the lens of the galvanometer cannot be reduced.

A marking device using a laser beam and an ionizer, which can prevent the adherence of dust on a convergent lens unit and, at the same time, can remove dust that occurs on a marking area, is known from JP 2009 285674 A (describing the preamble of claim 1).

A dust removal device used for a laser groove comprising an air inlet and an ionizing bar is known from CN 202 411658 U.

### SUMMARY

In view of the foregoing problems, the present invention provides a dust removal assembly. The dust removal assembly can reduce the risk of dust adhering to a lens of a galvanometer and other structures due to static electricity, and can also implement automatic cleaning of the lens of the galvanometer and other structures.

The present invention further provides a laser welding device including the foregoing dust removal assembly.

According to a first aspect of the present invention, a dust removal assembly is defined in claim 1, which includes: a base; a nozzle, where the nozzle is disposed on the base, the nozzle includes an accommodating chamber, and an air inlet and an air outlet in communication with the accommodating chamber, and the nozzle is configured to introduce compressed air to the accommodating chamber via the air inlet and exhaust the compressed air via the air outlet; and an ionizing bar, where the ionizing bar is disposed in the accommodating chamber, and the ionizing bar is arranged between the air inlet and the air outlet.

In the technical solution of embodiments of this application, the ionizing bar is disposed in the accommodating chamber, and compressed air is introduced to the accommodating chamber via the air inlet. The compressed air can blow the ionic wind produced by the ionizing bar to the lens of the galvanometer and other structures. This can eliminate static electricity in the electrostatically charged dust, and reduce the risk of dust adhering to the lens of the galvanometer and other structures due to static electricity. In addition, the compressed air is exhausted via the air outlet to form a high-speed air flow which can blow away non-electrostatic dust in a timely manner, thereby implementing automatic cleaning of the lens of the galvanometer and other structures and addressing the need of periodically cleaning the lens of the galvanometer and other structures. With the ionizing bar arranged between the air inlet and the air outlet, the compressed air entering the accommodating chamber via the air inlet can flow through the ionizing bar and drive the ionic wind produced by the ionizing bar to flow toward the air outlet, thereby increasing the flow velocity of the ionic wind and improving the work efficiency.

According to the present invention, the flow area of the accommodating chamber decreases gradually in a direction approaching the air outlet. In this way, as the compressed air flows, air pressure increases gradually, which can increase the flow velocity of the compressed air, causing the compressed air to be ejected from the air outlet to form a high-speed air flow. The high-speed air flow can blow away the non-electrostatic dust on the lens in a timely manner, thereby implementing automatic cleaning of the lens of the galvanometer and other structures and addressing the need of periodically cleaning the lens of the galvanometer and other structures.

In some embodiments, the nozzle includes: two shells arranged opposite each other; a connecting base, where the connecting base is connected to one end of each of the two shells in a length direction, the accommodating chamber is defined between the connecting base and the two shells, and the two shells define the air outlet at the other end in the length direction. With the nozzle configured as the foregoing structure, the ionizing bar can be easily mounted into the nozzle, simplifying the mounting and dismounting steps of the ionizing bar and facilitating maintenance.

In some embodiments, a length direction of the ionizing bar extends in a width direction of the shell, and at least one end of the ionizing bar is sandwiched between the two shells. With at least one end of the ionizing bar sandwiched between the two shells, the ionizing bar can be easily mounted and dismounted, and the mounting reliability and stability of the ionizing bar can be guaranteed, allowing the ionizing bar to operate properly.

In some embodiments, the two shells define the air inlet on at least one end in the width direction. This does not affect mounting of the nozzle, and also can prevent a connecting pipe between the air inlet and the compressed air generation apparatus from interfering with structural members of accessories of the nozzle.

In some embodiments, one end of each shell in the length direction is connected to the connecting base via a fastener, which guarantees the connection reliability between the shell and the connecting base. In addition, the mounting and dismounting steps are simple and easy to implement.

In some embodiments, the nozzle is externally provided with a pipe joint communicating with the air inlet, and the pipe joint is suitable for communicating with the compressed air generating apparatus. The pipe joint protrudes out of an outer surface of the shell, which allows the pipe joint to communicate with the compressed air generating apparatus via the connecting pipe, ensuring that the compressed air can be conveyed into the accommodating chamber via the air inlet.

According to the present invention, the base is provided with a first bracket, and the nozzle is swingingly disposed on the first bracket. With the nozzle swingingly disposed on the first bracket, the nozzle can swing back and forth in the blowing process, such that the high-speed air flow with ionic wind blown out of the nozzle can cover the entire lens of the galvanometer and other structures, thereby implementing automatic cleaning of the lens of the galvanometer and other structures.

In some embodiments, the dust removal assembly further includes a first drive apparatus, where the first drive apparatus is disposed on the base and connected to the nozzle, and is configured to drive the nozzle to swing. With the first drive apparatus provided, the first drive apparatus can be used to drive the nozzle to swing according to a preset track, so that the nozzle can blow in a preset range to meet specified usage requirements.

In some embodiments, the first drive apparatus includes a cylinder piston assembly, and the base is provided with a second bracket, where one of the second bracket and the nozzle is rotatably connected to a cylinder of the cylinder piston assembly, and the other one of the second bracket and the nozzle is rotatably connected to a piston rod of the cylinder piston assembly. With the first drive apparatus designed as including a cylinder piston assembly, the nozzle can swing stably. In addition, the cylinder piston assembly features simple structure and operating principle, easy mounting and maintenance, and low requirement on operators, helping to reduce the use costs.

In some embodiments, the nozzle is provided with a connecting lug, and the connecting lug is rotatably connected to the cylinder or piston rod of the cylinder piston assembly via a connecting shaft, helping to guarantee the connection reliability of the nozzle and the cylinder or piston rod of the cylinder piston assembly.

According to a second aspect of the present invention, a laser welding device with such dust removal assembly is defined in claim 10, the device includes a workbench; a support frame, where the support frame is disposed on the workbench; a galvanometer, where the galvanometer is movably disposed on the support frame; and the dust removal assembly according to the foregoing embodiment, where the dust removal assembly is detachably disposed on the workbench, and the air outlet is disposed toward a lens of the galvanometer.

In the technical solution of the embodiments of the present invention, with the foregoing dust removal assembly, static electricity in the electrostatically charged dust can be eliminated, and the risk of dust adhering to the lens of the galvanometer due to static electricity can be reduced. In addition, the compressed air is exhausted via the air outlet to form a high-speed air flow which can blow away the non-electrostatic dust on the lens in a timely manner, thereby implementing automatic cleaning of the lens of the galvanometer and addressing the need of periodically cleaning the lens of the galvanometer.

In some embodiments, the support frame is provided with a second drive apparatus and a mounting plate, where the second drive apparatus is connected to the mounting plate so as to drive the mounting plate to move up and down; and the galvanometer is disposed on the mounting plate so as to move with the mounting plate. With the second drive apparatus disposed on the support frame, the second drive apparatus can be used to drive the mounting plate to move, and the mounting plate then drives the galvanometer to move up and down, so that the galvanometer can move to a preset height position, ensuring normal operation of the laser welding device.

In some embodiments, the dust removal assembly is provided in plurality, and the plurality of dust removal assemblies are spaced apart in a circumferential direction of the galvanometer. With the plurality of dust removal assemblies, ionic wind can be blown to the lens of the galvanometer from different directions, which can eliminate static electricity in the electrostatically charged dust, and reduce the risk of dust adhering to the lens of the galvanometer due to static electricity. In addition, the compressed air is exhausted via the air outlet to form a high-speed air flow which can blow away the non-electrostatic dust on the lens from different directions in a timely manner, thereby implementing automatic cleaning of the lens of the galvanometer.

Additional aspects and advantages of the present invention will be given in part in the following description, part of which will become apparent from the following description or be learned from the practice of this application.

### BRIEF DESCRIPTION OF DRAWINGS

To describe the technical solutions of the embodiments of the present invention more clearly, the following briefly describes the accompanying drawings required for describing the embodiments. It should be understood that the accompanying drawings below show merely some embodiments of the present invention and therefore should not be considered as limitations on the scope of the present invention, which is defined by the appended claims. Persons of ordinary skill in the art may still derive other related drawings from the accompanying drawings without creative efforts.
FIG. 1 is a three-dimensional diagram of a dust removal assembly according to some embodiments of this application;
FIG. 2 is a top view of a dust removal assembly according to some embodiments of this application;
FIG. 3 is a cross-sectional view of a structure of a dust removal assembly according to some embodiments of this application;
FIG. 4 is a schematic diagram of a laser welding device from one perspective according to some embodiments of this application; and
FIG. 5 is a schematic diagram of the laser welding device from another perspective according to some embodiments of this application.

Reference signs:
dust removal assembly 100;
base 11;
nozzle 12; accommodating chamber 1201; air inlet 1202; air outlet 1203;
shell 121; connecting base 122; pipe joint 125; connecting lug 126; connecting shaft 127;
ionizing bar 13;
first bracket 141; second bracket 142;
first drive apparatus 15; cylinder 151; piston rod 152;
laser welding device 200;
workbench 21; support frame 22; second drive apparatus 221; mounting plate 222; and galvanometer 23.

### DESCRIPTION OF EMBODIMENTS

To make the objectives, technical solutions, and advantages of the embodiments of the present invention clearer, the following clearly describes the technical solutions in the embodiments of this application with reference to the accompanying drawings in the embodiments of this present invention. Apparently, the embodiments described are some rather than all of embodiments of this application.

Unless otherwise defined, all technical and scientific terms used in this disclosure shall have the same meanings as commonly understood by those skilled in the art to which this application relates. The terms used in the specification of this application are intended to merely describe the specific embodiments rather than to limit this application. The terms "include", "comprise", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular sequence or a primary-secondary relationship.

Reference to "embodiment" in this present disclosure means that specific features, structures, or characteristics described with reference to the embodiments may be included in at least one embodiment of the present invention. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the present disclosure, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is merely for describing an associative relationship of associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments, the same reference signs denote the same components. For brevity, in different embodiments, detailed descriptions of the same components are omitted. It should be understood that, as shown in the accompanying drawings, sizes such as thickness, length, and width of various components and sizes such as overall thickness, length, and width of integrated devices in the embodiments of this application are merely for illustrative purposes and should not constitute any limitations on this application.

A galvanometer-type laser welding device, also known as galvo laser welding device, has the advantages such as high welding speed, high accuracy, stable quality, easy operation, and simple maintenance, and is especially suitable for laser precision spot welding of various components and parts. During actual operation, welding fumes, welding spatter, airborne fibers, and electrostatically charged dust are likely to adhere to and contaminate the lens of the galvanometer, which seriously affects normal operation of the galvanometer.

In related technologies, a laser marking machine is disclosed, including a galvanometer and a dustproof lens installed at the bottom of the galvanometer. A fastening frame and an ionizing bar fastened to the fastening frame are disposed below the galvanometer. Ionic wind produced by the ionizing bar can eliminate static electricity of dust in air below the galvanometer, thereby preventing dust from adhering to the lens of the galvanometer due to static electricity.

However, if dust has adhered to the lens of the galvanometer, the lens of the galvanometer cannot be cleaned automatically, and the risk of non-electrostatic dust (such as welding fumes, welding spatter, and airborne fibers) adhering to and contaminating the lens of the galvanometer cannot be reduced.

In view of this, an embodiment provides a dust removal assembly including an ionizing bar and capable of introducing compressed air to an accommodating chamber via an air inlet, so as to reduce the risk of dust adhering to a lens of a galvanometer and other structures due to static electricity, and blow away the non-electrostatic dust on the lens in a timely manner to implement automatic cleaning of the lens of the galvanometer and other structures.

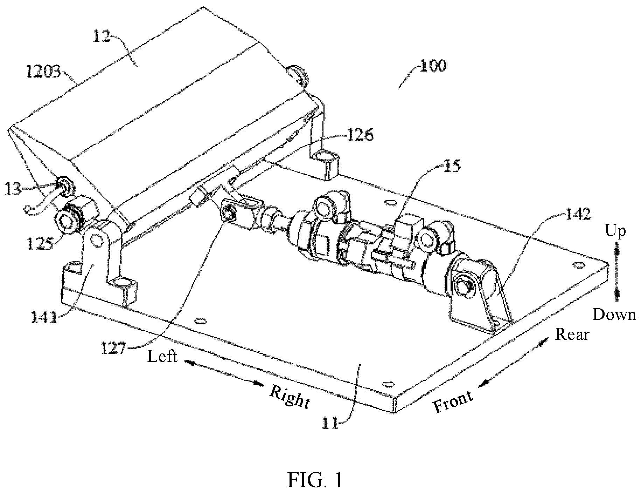

The following describes a dust removal assembly 100 according to an embodiment of this application with reference to FIG. 1 to FIG. 3.

As shown in FIG. 1 to FIG. 3, the dust removal assembly 100 in this embodiment includes a base 11, a nozzle 12, and an ionizing bar 13. The nozzle 12 is disposed on the base 11. The nozzle 12 includes an accommodating chamber 1201, an air inlet 1202, and an air outlet 1203, where the air inlet 1202 and the air outlet 1203 are both in communication with the accommodating chamber 1201. The ionizing bar 13 is disposed in the accommodating chamber 1201, and the ionizing bar 13 is arranged between the air inlet 1202 and the air outlet 1203.

The nozzle 12 is constructed to introduce compressed air to the accommodating chamber 1201 via the air inlet 1202 and exhaust the compressed air via the air outlet 1203.

Specifically, the compressed air can enter the accommodating chamber 1201 via the air inlet 1202, and can be exhausted from the nozzle 12 via the air outlet 1203 to form a high-speed air flow. The high-speed air flow can blow through the lens of the galvanometer 23 and other structures, thereby removing the dust, welding spatter, airborne fibers, and the like adhering to the lens. The ionizing bar 13 can produce ionic wind in the accommodating chamber 1201. Driven by the high-speed air flow, the ionic wind is exhausted via the air outlet 1203, thereby eliminating static electricity of dust in the air, and preventing the dust from adhering to the lens of the galvanometer 23 and other structures due to the static electricity.

In the technical solution of this embodiment, the ionizing bar 13 is disposed in the accommodating chamber 1201, and compressed air is introduced to the accommodating chamber 1201 via the air inlet 1202. The compressed air can blow the ionic wind produced by the ionizing bar 13 to the lens of the galvanometer 23 and other structures. This can eliminate static electricity in the electrostatically charged dust, and reduce the risk of dust adhering to the lens of the galvanometer 23 and other structures due to static electricity. In addition, the compressed air is exhausted via the air outlet 1203 to form a high-speed air flow which can blow away non-electrostatic dust in a timely manner, thereby implementing automatic cleaning of the lens of the galvanometer 23 and other structures and addressing the need of periodically cleaning the lens of the galvanometer 23 and other structures.

In addition, with the ionizing bar 13 arranged between the air inlet 1202 and the air outlet 1203, the compressed air entering the accommodating chamber 1201 via the air inlet 1202 can flow through the ionizing bar 13 to drive the ionic wind produced by the ionizing bar 13 to flow toward the air outlet 1203, thereby increasing the flow velocity of the ionic wind and improving the work efficiency.

The flow area of the accommodating chamber 1201 decreases gradually in a direction approaching the air outlet 1203. In other words, the flow area of the accommodating chamber 1201 decreases gradually in an air flow direction.

In this way, as the compressed air flows, air pressure increases gradually, which can increase the flow velocity of the compressed air, causing the compressed air to be ejected from the air outlet 1203 to form a high-speed air flow. The high-speed air flow can blow away the non-electrostatic dust on the lens in a timely manner, thereby implementing automatic cleaning of the lens of the galvanometer 23 and other structures and addressing the need of periodically cleaning the lens of the galvanometer 23 and other structures.

As shown in FIG. 1 to FIG. 3, in some embodiments, the nozzle 12 includes two shells 121 and a connecting base 122. The two shells 121 are arranged opposite each other; the connecting base 122 is connected to one end of each of the two shells 121 in a length direction; the accommodating chamber 1201 is defined between the connecting base 122 and the two shells 121; and the two shells 121 define the air outlet 1203 at the other end in the length direction.

Therefore, with the nozzle 12 configured as the foregoing structure, the ionizing bar 13 can be easily mounted into the nozzle 12, simplifying the mounting and dismounting steps of the ionizing bar 13 and facilitating maintenance.

In some specific embodiments, an inner side surface of each shell 121 forms a plane; the two shells 121 are arranged opposite each other; and in the length direction of the shells 121, distance between the inner side surfaces of the two shells 121 decreases gradually along a direction approaching the air outlet 1203, such that in the length direction of the shell 121, the flow area of the accommodating chamber 1201 decreases along the direction approaching the air outlet 1203. In this way, the compressed air is ejected from the air outlet 1203 to form a high-speed air flow. The high-speed air flow can blow away the non-electrostatic dust on the lens in a timely manner, thereby implementing automatic cleaning of the lens of the galvanometer 23 and other structures.

In some embodiments, a length direction of the ionizing bar 13 extends a long a width direction (a front-rear direction shown in FIG. 1) of the shell 121, and at least one end of the ionizing bar 13 is sandwiched between the two shells 121. With at least one end of the ionizing bar 13 sandwiched between the two shells 121, the ionizing bar 13 can be easily mounted and dismounted, and the mounting reliability and stability of the ionizing bar 13 can be guaranteed, allowing the ionizing bar 13 to operate properly.

In some embodiments, the two shells 121 define the air inlet 1202 on at least one end in the width direction. This does not affect mounting of the nozzle 12, and also can prevent a connecting pipe between the air inlet 1202 and the compressed air generating apparatus from interfering with structural members of accessories of the nozzle 12.

In some embodiments, one end of each of the shells 121 in the length direction is connected to the connecting base 122 via a fastener (not shown in the figure), which can guarantee the connection reliability between the shell 121 and the connecting base 122. In addition, the mounting and dismounting steps are simple and easy to implement.

Specifically, as shown in FIG. 1, each shell 121 is provided with a first connecting hole in an end face of one end in the length direction; the connecting base 122 is provided with a second connecting hole; and one end of each shell 121 in the length direction is connected to the connecting base 122 via a fastener running through the first connecting hole and the second connecting hole.

Certainly, the two shells 121, as well as the shells 121 and the connecting base 122, may alternatively be bonded or clamped. This is not limited in this application.

In some embodiments, the nozzle 12 is externally provided with a pipe joint 125, the pipe joint 125 communicates with the air inlet 1202, and the pipe joint 125 is suitable for communicating with the compressed air generating apparatus.

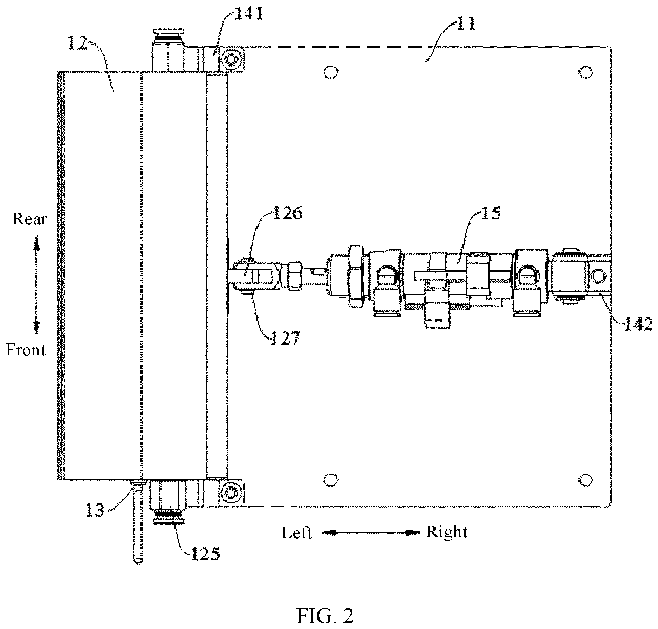

Specifically, as shown in FIG. 1 and FIG. 2, one air inlet 1202 is provided on each of two sides of the shell 121 in the width direction; and each air inlet 1202 is provided with the pipe joint 125. The pipe joint 125 protrudes out of an outer surface of the shell 121, which allows the pipe joint 125 to communicate with the compressed air generating apparatus via the connecting pipe, ensuring that the compressed air can be conveyed into the accommodating chamber 1201 via the air inlet 1202.

The base 11 is provided with a first bracket 141, and the nozzle 12 is swingingly disposed on the first bracket 141.

Therefore, with the nozzle 12 swingingly disposed on the first bracket 141, the nozzle 12 can swing back and forth in the blowing process, such that the high-speed air flow with ionic wind blown out of the nozzle 12 can cover the entire lens of the galvanometer 23 and other structures, thereby implementing automatic cleaning of the lens of the galvanometer 23 and other structures.

Specifically, as shown in FIG. 1, the first bracket 141 includes two support seats; the two support seats are spaced apart in the width direction of the nozzle 12; the nozzle 12 is disposed between the two support seats; and two sides of the nozzle 12 in the width direction are respectively rotatably connected to the two support seats via rotating shafts, such that the nozzle 12 can swing around the rotating shafts. This expands the blowing range of the nozzle 12, and implements automatic cleaning of the lens of the galvanometer 23 and other structures.

As shown in FIG. 1 to FIG. 3, in some embodiments, the dust removal assembly 100 further includes a first drive apparatus 15. The first drive apparatus 15 is disposed on the base 11; the first drive apparatus 15 is connected to the nozzle 12; and the first drive apparatus 15 is configured to drive the nozzle 12 to swing.

Therefore, with the first drive apparatus 15 provided, the first drive apparatus 15 can be used to drive the nozzle 12 to swing according to a preset track, so that the nozzle 12 can implement blowing in a preset range to meet specified usage requirements.

In some embodiments, the first drive apparatus 15 may be a motor, and the motor can be used to electrically drive the nozzle 12, allowing for convenient control.

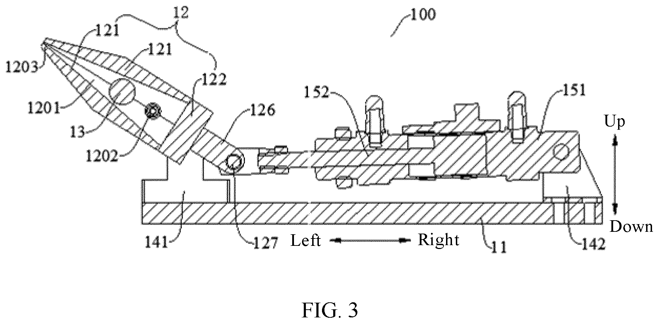

As shown in FIG. 3, in some embodiments, the first drive apparatus 15 includes a cylinder piston assembly, and the base 11 is provided with a second bracket 142, where one of the second bracket 142 and the nozzle 12 is rotatably connected to a cylinder 151 of the cylinder piston assembly, and the other one of the second bracket 142 and the nozzle 12 is rotatably connected to a piston rod 152 of the cylinder piston assembly.

Specifically, the cylinder piston assembly includes the cylinder 151 and the piston rod 152, where the cylinder 151 is totatably disposed on the second bracket 142; the cylinder 151 defines a chamber; the piston rod 152 is provided with a piston at one end; the piston is in slidable fit with an inner circumferential wall of the chamber; and the other end of the piston rod 152 is rotatably connected to the nozzle 12.

As the cylinder piston assembly operates, the piston rod 152 moves back and forth in an axial direction of the chamber, and the piston rod 152 can drive the nozzle 12 to swing such that the nozzle 12 can implement blowing in a preset range.

In this way, with the first drive apparatus 15 designed as including the cylinder piston assembly, the nozzle 12 can swing stably. In addition, the cylinder piston assembly features simple structure and operating principle, easy mounting and maintenance, and low requirement on operators, helping to reduce the use costs.

As shown in FIG. 1 and FIG. 3, in some embodiments, the nozzle 12 is provided with a connecting lug 126, and the connecting lug 126 is rotatably connected to the cylinder 151 or piston rod 152 of the cylinder piston assembly via a connecting shaft 127. Such structure is simple and easy to mount and dismount, facilitating the reliable connection between the nozzle 12 and the cylinder 151 or piston rod 152 of the cylinder piston assembly.

Specifically, the connecting lug 126 may be connected to one end of the nozzle 12 in the length direction. In the foregoing embodiment in which the nozzle 12 includes the two shells 121 and the connecting base 122, the connecting lug 126 is connected to the connecting base 122.

In some embodiments, the two shells 121 define the air inlet 1202 on at least one end in the width direction. With the air inlet 1202 disposed on at least one end of the two shells 121 in the width direction, a connecting pipe between the air inlet 1202 and the compressed air generating apparatus can be prevented from interfering with the nozzle 12, ensuring that the nozzle 12 can swing normally to blow through the lens of the galvanometer 23 and other structures.

The following describes a laser welding device 200 according to an embodiment of this application with reference to the accompanying drawings.

As shown in FIG. 1 to FIG. 5, the laser welding device 200 according to this embodiment of this application includes a workbench 21, a support frame 22, a galvanometer 23, and the dust removal assembly 100 according to the foregoing embodiments.

The support frame 22 is disposed on the workbench 21; the galvanometer 23 is movably disposed on the support frame 22; the dust removal assembly 100 is detachably disposed on the workbench 21; and the air outlet 1203 is disposed toward the lens of the galvanometer 23.

In the technical solution of this embodiment of this application, with the foregoing dust removal assembly 100, static electricity in the electrostatically charged dust can be eliminated, and the risk of dust adhering to the lens of the galvanometer 23 due to static electricity can be reduced. In addition, the compressed air is exhausted via the air outlet 1203 to form a high-speed air flow which can blow away the non-electrostatic dust on the lens in a timely manner, thereby implementing automatic cleaning of the lens of the galvanometer 23 and addressing the need of periodically cleaning the lens of the galvanometer 23.

In some embodiments, the base 11 can be fastened to the workbench 21 via a fastener, ensuring reliable and stable mounting of the dust removal assembly 100 on the workbench 21.

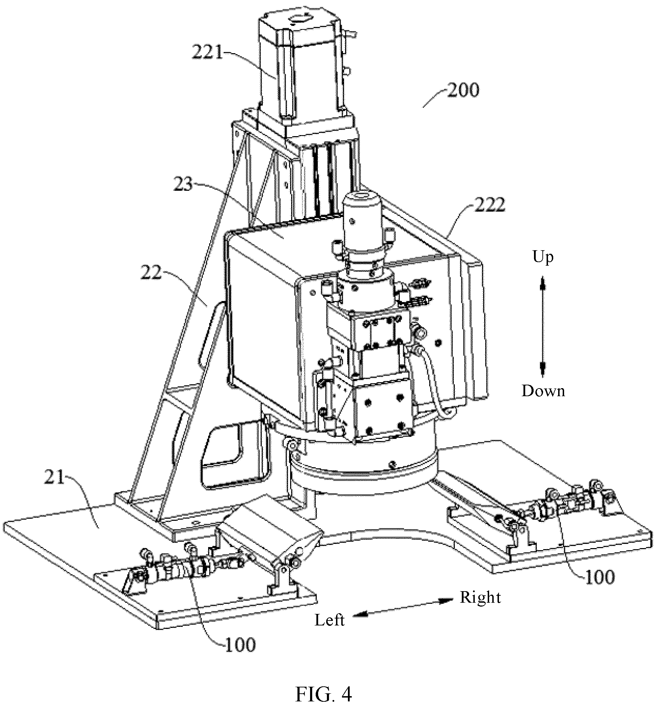

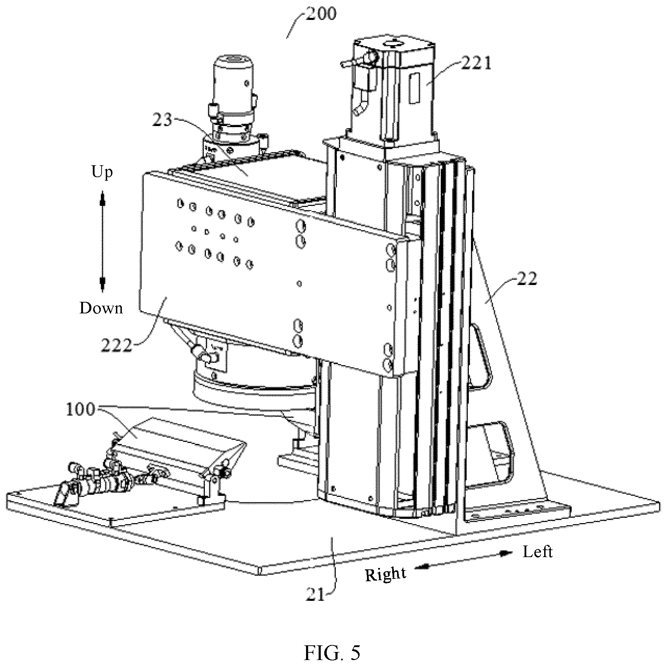

As shown in FIG. 4 and FIG. 5, in some embodiments, the support frame 22 is provided with a second drive apparatus 221 and a mounting plate 222, where the second drive apparatus 221 is connected to the mounting plate 222; the second drive apparatus 221 can drive the mounting plate 222 to move up and down; the galvanometer 23 is disposed on the mounting plate 222; and the galvanometer 23 can move with the mounting plate 222.

Therefore, with the second drive apparatus 221 disposed on the support frame 22, the second drive apparatus 221 can be used to drive the mounting plate 222 to move, and then the mounting plate 222 drives the galvanometer 23 to move up and down so that the galvanometer 23 can move to a preset height position, ensuring normal operation of the laser welding device 200.

In some embodiments, the dust removal assembly 100 is provided in plurality, and the plurality of dust removal assemblies 100 are spaced apart in a circumferential direction of the galvanometer 23. With the plurality of dust removal assemblies 100 arranged in the circumferential direction of the galvanometer 23, the plurality of dust removal assemblies 100 can be used to blow ionic wind to the lens of the galvanometer 23 from different directions, which can eliminate static electricity in the electrostatically charged dust, and reduce the risk of dust adhering to the lens of the galvanometer 23 due to static electricity. In addition, the compressed air is exhausted via the air outlet 1203 to form a high-speed air flow which can blow away the non-electrostatic dust on the lens from different directions in a timely manner, thereby implementing automatic cleaning of the lens of the galvanometer 23.

As shown in FIG. 4, in this embodiment, two dust removal assemblies 100 are provided, and the two dust removal assemblies 100 are arranged opposite each other in a left-right direction.

It can be understood that other components and operations of the laser welding device 200 according to this embodiment are already known to persons skilled in the art, which are not described herein.

It should be noted that, without conflict, the embodiments and features in the embodiments may be combined with each other.

The foregoing descriptions are merely preferred embodiments of the present invention, and are not intended to limit the present invention, which scope is defined in the appended claims.

## Claims

1. A dust removal assembly (100), comprising:
a base (11);
a nozzle (12), wherein the nozzle (12) is disposed on the base (11), the nozzle (12) comprises an accommodating chamber (1201), and an air inlet (1202) and an air outlet (1203) in communication with the accommodating chamber (1201), and the nozzle (12) is constructed to introduce compressed air to the accommodating chamber (1201) via the air inlet (1202) and exhaust the compressed air via the air outlet (1203);
the dust removal apparatus (100) being **characterised by**:
an ionizing bar (13), wherein the ionizing bar (13) is disposed in the accommodating chamber (1201), and the ionizing bar (13) is arranged between the air inlet (1202) and the air outlet (1203); wherein
flow area of the accommodating chamber (1201) decreases gradually in a direction approaching the air outlet (1203);
wherein
the base (11) is provided with a first bracket (141), and the nozzle (12) is swingingly disposed on the first bracket (141).

2. The dust removal assembly (100) according to claim 1, wherein the nozzle (12) comprises:
two shells (121) arranged opposite each other; and
a connecting base (122), wherein the connecting base (122) is connected to one end of each of the two shells (121) in a length direction; the accommodating chamber (1201) is defined between the connecting base (122) and the two shells (121), and the two shells (121) define the air outlet (1203) at the other end in the length direction.

3. The dust removal assembly (100) according to claim 2, wherein a length direction of the ionizing bar (13) extends in a width direction of the shell (121), and at least one end of the ionizing bar (13) is sandwiched between the two shells (121).

4. The dust removal assembly (100) according to claim 2 or 3, wherein the two shells (121) define the air inlet (1202) on at least one end in the width direction.

5. The dust removal assembly (100) according to any one of claims 2 to 4, wherein one end of each shell (121) in the length direction is connected to the connecting base (122) via a fastener.

6. The dust removal assembly (100) according to any one of claims 1 to 5, wherein the nozzle (12) is externally provided with a pipe joint (125) communicating with the air inlet (1202), and the pipe joint (125) communicates with a compressed air generating apparatus.

7. The dust removal assembly (100) according to claim 1, further comprising:
a first drive apparatus (15), wherein the first drive apparatus (15) is disposed on the base (11) and connected to the nozzle (12), and is configured to drive the nozzle (12) to swing.

8. The dust removal assembly (100) according to claim 7, wherein the first drive apparatus (15) comprises a cylinder piston assembly, and the base (11) is provided with a second bracket (142), wherein one of the second bracket (142) and the nozzle (12) is rotatably connected to a cylinder (151) of the cylinder piston assembly; and the other one of the second bracket (142) and the nozzle (12) is rotatably connected to a piston rod (152) of the cylinder piston assembly.

9. The dust removal assembly (100) according to claim 8, wherein the nozzle (12) is provided with a connecting lug (126), and the connecting lug (126) is rotatably connected to the cylinder (151) or piston rod (152) of the cylinder piston assembly via a connecting shaft (127).

10. A laser welding device (200), comprising:
a workbench (21);
a support frame (22), wherein the support frame (22) is disposed on the workbench (21);
a galvanometer (23), wherein the galvanometer (23) is movably disposed on the support frame (22);
the laser welding device (200) being **characterised by**:
the dust removal assembly (100) according to any one of claims 1 to 9, wherein the dust removal assembly (100) is detachably disposed on the workbench (21), and the air outlet (1203) is disposed toward a lens of the galvanometer (23).

11. The laser welding device (200) according to claim 10, wherein the support frame (22) is provided with a second drive apparatus (221) and a mounting plate (222); the second drive apparatus (221) is connected to the mounting plate (222) so as to drive the mounting plate (222) to move up and down; and the galvanometer (23) is disposed on the mounting plate (222) so as to move with the mounting plate (222).

12. The laser welding device (200) according to claim 11, wherein the dust removal assembly (100) is provided in plurality, and the plurality of dust removal assemblies (100) are spaced apart in a circumferential direction of the galvanometer (23).

## Patentansprüche

1. Staubentfernungsanordnung (100), umfassend:
eine Basis (11);
eine Düse (12), wobei die Düse (12) auf der Basis (11) angebracht ist, die Düse (12) eine Aufnahmekammer (1201) und einen Lufteinlass (1202) und einen Luftauslass (1203) in Verbindung mit der Aufnahmekammer (1201) umfasst, und die Düse (12) so konstruiert ist, dass sie Druckluft über den Lufteinlass (1202) in die Aufnahmekammer (1201) einleitet und die Druckluft über den Luftauslass (1203) abgibt;
die Staubentfernungsvorrichtung (100) **gekennzeichnet ist durch**:
einen Ionisationsstab (13), wobei der Ionisationsstab (13) in der Aufnahmekammer (1201) angebracht ist und der Ionisationsstab (13) zwischen dem Lufteinlass (1202) und dem Luftauslass (1203) angeordnet ist; wobei
der Durchflussbereich der Aufnahmekammer (1201) in einer Richtung des Luftauslasses (1203) allmählich abnimmt: wobei
die Basis (11) mit einer ersten Halterung (141) bereitgestellt ist und die Düse (12) an der ersten Halterung (141) schwenkbar angebracht ist.

2. Staubentfernungsanordnung (100) nach Anspruch 1, wobei die Düse (12) Folgendes umfasst:
zwei Schalen (121), die einander gegenüberliegend angeordnet sind; und
eine Verbindungsbasis (122), wobei die Verbindungsbasis (122) mit einem Ende jeder der zwei Schalen (121) in einer Längsrichtung verbunden ist; die Aufnahmekammer (1201) zwischen der Verbindungsbasis (122) und den zwei Schalen (121) definiert ist und die zwei Schalen (121) den Luftauslass (1203) an dem anderen Ende in der Längsrichtung definieren.

3. Staubentfernungsanordnung (100) nach Anspruch 2, wobei sich eine Längsrichtung des Ionisationsstabs (13) in einer Breitenrichtung der Schale (121) erstreckt und mindestens ein Ende des Ionisationsstabs (13) zwischen den zwei Schalen (121) sandwichartig angeordnet ist.

4. Staubentfernungsanordnung (100) nach Anspruch 2 oder 3, wobei die zwei Schalen (121) den Lufteinlass (1202) an mindestens einem Ende in der Breitenrichtung definieren.

5. Staubentfernungsanordnung (100) nach einem der Ansprüche 2 bis 4, wobei ein Ende jeder Schale (121) in der Längsrichtung über ein Befestigungselement mit der Verbindungsbasis (122) verbunden ist.

6. Staubentfernungsanordnung (100) nach einem der Ansprüche 1 bis 5, wobei die Düse (12) außen mit einer Rohrverbindung (125) bereitgestellt ist, die mit dem Lufteinlass (1202) in Verbindung steht, und die Rohrverbindung (125) mit einer Drucklufterzeugungsvorrichtung in Verbindung steht.

7. Staubentfernungsanordnung (100) nach Anspruch 1, ferner umfassend:
eine erste Antriebsvorrichtung (15), wobei die erste Antriebsvorrichtung (15) auf der Basis (11) angebracht ist und mit der Düse (12) verbunden und so konfiguriert ist, dass sie die Düse (12) zum Schwenken antreibt.

8. Staubentfernungsanordnung (100) nach Anspruch 7, wobei die erste Antriebsvorrichtung (15) eine Zylinderkolbenanordnung umfasst und die Basis (11) mit einer zweiten Halterung (142) bereitgestellt ist, wobei entweder die zweite Halterung (142) oder die Düse (12) mit einem Zylinder (151) der Zylinderkolbenanordnung drehbar verbunden ist; und die andere der zweiten Halterung (142) und der Düse (12) mit einer Kolbenstange (152) der Zylinderkolbenanordnung drehbar verbunden ist.

9. Staubentfernungsanordnung (100) nach Anspruch 8, wobei die Düse (12) mit einem Verbindungsansatz (126) bereitgestellt ist und der Verbindungsansatz (126) über eine Verbindungswelle (127) mit dem Zylinder (151) oder der Kolbenstange (152) der Zylinderkolbenanordnung drehbar verbunden ist.

10. Laserschweißvorrichtung (200), umfassend:
eine Werkbank (21);
einen Stützrahmen (22), wobei der Stützrahmen (22) auf der Werkbank (21) angebracht ist;
ein Galvanometer (23), wobei das Galvanometer (23) auf dem Stützrahmen (22) bewegbar angebracht ist;
die Laserschweißvorrichtung (200) **gekennzeichnet ist durch**:
die Staubentfernungsanordnung (100) nach einem der Ansprüche 1 bis 9, wobei die Staubentfernungsanordnung (100) auf der Werkbank (21) lösbar angebracht ist und der Luftauslass (1203) in Richtung einer Linse des Galvanometers (23) angebracht ist.

11. Laserschweißvorrichtung (200) nach Anspruch 10, wobei der Stützrahmen (22) mit einer zweiten Antriebsvorrichtung (221) und einer Montageplatte (222) bereitgestellt ist; die zweite Antriebsvorrichtung (221) mit der Montageplatte (222) verbunden ist, um die Montageplatte (222) zu einer Auf- und Abbewegung anzutreiben; und das Galvanometer (23) auf der Montageplatte (222) angebracht ist, um sich mit der Montageplatte (222) zu bewegen.

12. Laserschweißvorrichtung (200) nach Anspruch 11, wobei die Staubentfernungsanordnung (100) in einer Vielzahl bereitgestellt ist und die Vielzahl von Staubentfernungsanordnungen (100) in einer Umfangsrichtung des Galvanometers (23) voneinander beabstandet sind.

## Revendications

1. Ensemble d'élimination de poussière (100), comprenant :
une base (11) ;
une buse (12), dans lequel la buse (12) est disposée sur la base (11), la buse (12) comprend une chambre de logement (1201), et une entrée d'air (1202) et une sortie d'air (1203) en communication avec la chambre de logement (1201), et la buse (12) est construite pour introduire de l'air comprimé dans la chambre de logement (1201) par l'intermédiaire de l'entrée d'air (1202) et évacuer l'air comprimé par l'intermédiaire de la sortie d'air (1203) ;
l'appareil d'élimination de poussière (100) étant **caractérisé par** :
une barre d'ionisation (13), dans lequel la barre d'ionisation (13) est disposée dans la chambre de logement (1201), et la barre d'ionisation (13) est disposée entre l'entrée d'air (1202) et la sortie d'air (1203) ; dans lequel
la zone d'écoulement de la chambre de logement (1201) diminue progressivement dans une direction approchant la sortie d'air (1203) ;
dans lequel
la base (11) est pourvue d'un premier support (141), et la buse (12) est disposée de manière oscillante sur le premier support (141).

2. Ensemble d'élimination de poussière (100) selon la revendication 1, dans lequel la buse (12) comprend :
deux coquilles (121) disposées en regard l'une de l'autre ; et
une base de raccordement (122), dans lequel la base de raccordement (122) est raccordée à une extrémité de chacune des deux coques (121) dans une direction longitudinale ; la chambre de logement (1201) est définie entre la base de raccordement (122) et les deux coques (121), et les deux coques (121) définissent la sortie d'air (1203) sur l'autre extrémité dans la direction longitudinale.

3. Ensemble d'élimination de poussière (100) selon la revendication 2, dans lequel une direction de longueur de la barre d'ionisation (13) s'étend dans une direction de largeur de la coque (121), et au moins une extrémité de la barre d'ionisation (13) est prise en sandwich entre les deux coques (121).

4. Ensemble d'élimination de poussière (100) selon la revendication 2 ou 3, dans lequel les deux coques (121) définissent l'entrée d'air (1202) sur au moins une extrémité dans la direction de largeur.

5. Ensemble d'élimination de poussière (100) selon l'une quelconque des revendications 2 à 4, dans lequel une extrémité de chaque coque (121) dans la direction de la longueur est raccordée à la base de raccordement (122) par l'intermédiaire d'un élément de fixation.

6. Ensemble d'élimination de poussière (100) selon l'une quelconque des revendications 1 à 5, dans lequel la buse (12) est pourvue à l'extérieur d'un raccord de tuyau (125) communiquant avec l'entrée d'air (1202), et le raccord de tuyau (125) communique avec un appareil de production d'air comprimé.

7. Ensemble d'élimination de poussière (100) selon la revendication 1, comprenant en outre :
un premier appareil d'entraînement (15), dans lequel le premier appareil d'entraînement (15) est disposé sur la base (11) et est raccordé à la buse (12), et est configuré pour entraîner l'oscillation de la buse (12).

8. Ensemble d'élimination de poussière (100) selon la revendication 7, dans lequel le premier appareil d'entraînement (15) comprend un ensemble piston-cylindre, et la base (11) est pourvue d'un deuxième support (142), dans lequel l'un du deuxième support (142) et de la buse (12) est raccordé de manière rotative à un cylindre (151) de l'ensemble piston-cylindre ; et l'autre du deuxième support (142) et de la buse (12) est raccordé de manière rotative à une tige de piston (152) de l'ensemble piston-cylindre.

9. Ensemble d'élimination de poussière (100) selon la revendication 8, dans lequel la buse (12) est munie d'une patte de raccordement (126), et la patte de raccordement (126) est raccordée de manière rotative au cylindre (151) ou à la tige de piston (152) de l'ensemble cylindre-piston par l'intermédiaire d'un arbre de raccordement (127).

10. Dispositif de soudage au laser (200), comprenant :
un établi (21) ;
un bâti de support (22), dans lequel le cadre de support (22) est disposé sur l'établi (21) ;
un galvanomètre (23), dans lequel le galvanomètre (23) est disposé de manière mobile sur le bâti de support (22) ;
le dispositif de soudage au laser (200) étant **caractérisé par** :
l'ensemble d'élimination de poussière (100) selon l'une quelconque des revendications 1 à 9, dans lequel l'ensemble d'élimination de poussière (100) est disposé de manière amovible sur l'établi (21), et la sortie d'air (1203) est disposée vers une lentille du galvanomètre (23).

11. Dispositif de soudage au laser (200) selon la revendication 10, dans lequel le bâti de support (22) est pourvu d'un deuxième appareil d'entraînement (221) et d'une plaque de montage (222) ; le deuxième appareil d'entraînement (221) est connecté à la plaque de montage (222) de manière à entraîner la plaque de montage (222) pour qu'elle se déplace vers le haut et vers le bas ; et le galvanomètre (23) est disposé sur la plaque de montage (222) de manière à se déplacer avec la plaque de montage (222).

12. Dispositif de soudage au laser (200) selon la revendication 11, dans lequel l'ensemble d'élimination de poussière (100) est prévu en une pluralité, et la pluralité d'ensembles d'élimination de poussière (100) sont espacés dans une direction circonférentielle du galvanomètre (23).
